Europäisches Patentamt

(19) European Patent Office

Office européen des brevets

(11) Numéro de publication: **0 207 868**
**A1**

(12) # DEMANDE DE BREVET EUROPEEN

(21) Numéro de dépôt: 86440024.7

(22) Date de dépôt: 25.03.86

(51) Int. Cl.⁴: **B 26 B 27/00**
**B 65 H 35/00, A 61 F 15/00**

(30) Priorité: 02.12.85 FR 8517978
14.05.85 FR 8507518

(43) Date de publication de la demande:
07.01.87 Bulletin 87/2

(84) Etats contractants désignés:
AT BE CH DE GB IT LI LU NL SE

(71) Demandeur: De Ruyter, Jackie André
32, rue de la Cigale
F-68200 Mulhouse(FR)

(71) Demandeur: De Ruyter, Jean-Pierre
2, rue des Anémones
F-68500 Guebwiller(FR)

(71) Demandeur: Burger, Daniel
32, rue de la Cigale
F-68200 Mulhouse(FR)

(72) Inventeur: De Ruyter, Jackie André
32, rue de la Cigale
F-68200 Mulhouse(FR)

(72) Inventeur: De Ruyter, Jean-Pierre
2, rue des Anémones
F-68500 Guebwiller(FR)

(72) Inventeur: Burger, Daniel
32, rue de la Cigale
F-68200 Mulhouse(FR)

(74) Mandataire: Bossard, Jacques-René
CABINET ARBOUSSE BASTIDE 20 rue de Copenhague
F-67000 Strasbourg(FR)

(54) Dispositif de coupe notamment pour pansements.

(57) Dispositif de couperet destiné en particulier à sectionner des bandes ou rubans de largeur moyenne en textile ou fibres composites qui sont tissées ou superposées, caractérisé en ce qu'il comporte en combinaison deux carters (1) et (2) faisant fonction de pince en étant articulés entre eux à l'une de leurs extrémités, ces deux carters étant munis de machoires (4) et (5) destinées à maintenir le matériau à découper, un moyen de coupe constitué d'une lame (15) fixée sur le carter inférieur (2) et coopérant avec une roulette d'écrasement (16) fixée sur un curseur de coupe (9) évoluant dans le carter supérieur (1).

Fig. 9

EP 0 207 868 A1

- 1 -

# DISPOSITIF DE COUPE NOTAMMENT POUR PANSEMENTS.

La présente invention est relative aux ustensiles de coupe, et plus particulièrement elle concerne les dispositifs étudiés pour être employés à couper des bandes ou rubans de largeur moyenne en textile ou fibres qui sont tissées ou superposées.

Pour couper efficacement de tels matériaux, on utilise habituellement des ciseaux ou encore des cutter à lame circulaire.

Ces dispositifs présentent différents inconvénients au niveau du prix de revient et dans leur utilisation : dans le cas des ciseaux, il convient d'utiliser une paire de ciseaux de très bonne qualité et bien aiguisé, qui sont d'un prix de revient élevé, et les extrémités effilées des ciseaux peuvent être source d'accident lors de la manipulation, en particulier par des enfants.

Dans le cas des cutter à lame circulaire, le prix de revient des disques lames est à nouveau très élevé et l'emploi de tels cutter nécessite de poser le matériau à découper sur un support rigide et faire rouler le disque lame en appuyant fortement pour réaliser une coupe nette et propre. Au niveau de la sécurité, de tels cutter sont délicats à manipuler, car la lame est très fine et coupante et elle n'est pas protégée. Un tel dispositif ne peut être placé dans une poche ou dans

- 2 -

un tiroir sans risque de se blesser en le prenant sans précaution.

La présente invention se propose d'offrir un dispositif de coupe, qui est réalisé en matière plastique, muni d'une lame et qui présente des commodités de montage exceptionnelles, permettant d'abaisser le prix de vente et offrant des possibilités de couper efficacement toutes bandes de tissus ou matériau composite sans risque de blessure pour l'utilisateur.

Dans ce but, le dispositif objet de l'invention se caractérise par le fait qu'il comporte en combinaison deux carters articulés entre eux faisant pince, munis de machoires destinées à maintenir le matériau à découper, une lame coopérant avec une double roulette d'écrasement évoluant de part et d'autre de la lame et actionnée par un curseur.

Selon une première variante du dispositif, la double roulette peut être remplacée par un rouleau de pression unique et évoluant sur le fil de la lame.

Selon une seconde variante du dispositif, la roulette d'écrasement est remplacée par un curseur/patin monobloc, muni d'une gorge étroite et qui évolue de part et d'autre de la lame.

Selon une troisième variante du dispositif, la roulette d'écrasement est remplacée par un disque lame de faible diamètre et qui évolue dans une gorge étroite aménagée dans la table de coupe située entre les machoires d'immobilisation du matériau à découper.

Selon une dernière réalisation de l'invention, le couperet est intégré à un boîtier faisant office de magasin distributeur, et qui assure l'articulation des carters pour obtenir l'effet de pince sur la bande à découper.

Dans ce but le carter qui porte la lame et le carter qui contient le curseur patin, sont tous deux logés dans la partie frontale d'un boîtier articulé en deux coquilles, et ce boîtier peut être maintenu fermé par une languette et il

- 3 -

peut être maintenu limité dans son ouverture par des ergots placés sur les côtés, là où les coquilles se superposent, tandis qu'un cylindre d'avancée du matériau à découper coopère avec un cliquet d'avancement et un cliquet anti-retour. Le cliquet d'avancement étant solidaire des cloisons de positionnement latéral du matériau à découper, et le cliquet anti-retour étant solidaire lui de la table d'amenage.

D'autres applications du dispositif objet de l'invention peuvent être réalisées en utilisant une pièce faisant enclume, articulée à une extrémité et appuyant la bande à découper de part et d'autre de la lame.

L'invention sera mieux comprise à la lecture de la description détaillée qui suit et à l'examen des dessins annexés qui représentent à titre d'exemples non limitatifs ces types de réalisation de l'invention.

La figure 1 représente une vue en perspective du dispositif.

La figure 2 met en évidence les carters inférieurs et supérieurs avant leur assemblage articulé.

La figure 3 représente en détail le moyen de coupe selon une application du dispositif.

Les figures 4, 5, 6, 7, sont des vues de face des différents principes de coupe qui peuvent être employés.

La figure 8 représente en perspective le boîtier qui contient les carters du couperet, dans la dernière réalisation de l'invention.

La figure 9 représente le même boîtier entre-ouvert, équipé des carters du couperet.

La figure 10 est une coupe schématique avec l'emplacement réservé pour les carters, et le moyen d'avancement de la bande à découper.

La figure 11 représente le carter supérieur et le carter inférieur qui sont placés dans le boîtier.

La figure 12 est une variante de la réalisation des figures 1 à 7.

- 4 -

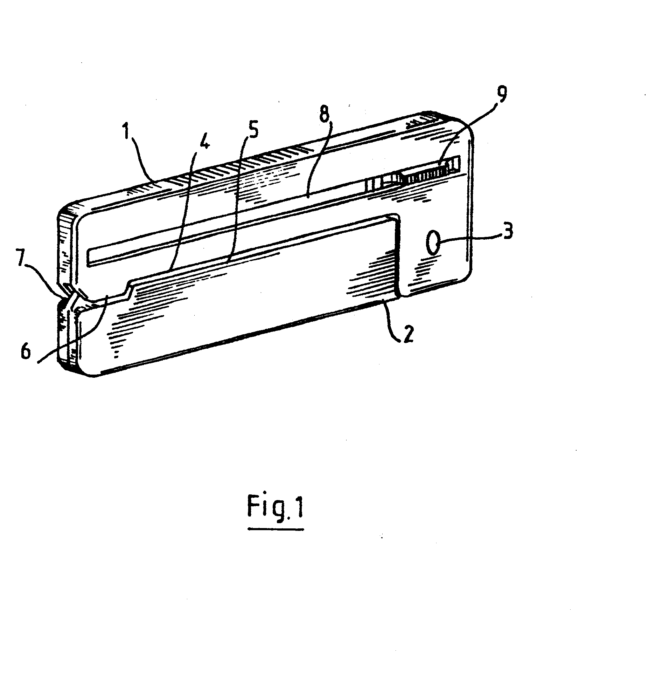

Si l'on se réfère à la figure 1, on voit le dispositif comprenant un carter supérieur (1) articulé sur le carter inférieur (2) au niveau de l'axe d'articulation (3), des machoires de retenue sont aménagées en (4) sur le bas du carter supérieur et en (5) sur le haut du carter inférieur. Les pattes de guidage (6) aménagées en tête des machoires (4) coopèrent avec un guide d'alignement (7) aménagé sur l'extrémité du carter inférieur (2). Une fenêtre (8) aménagée sur la face du carter supérieur (1) permet de déplacer le curseur de coupe (9).

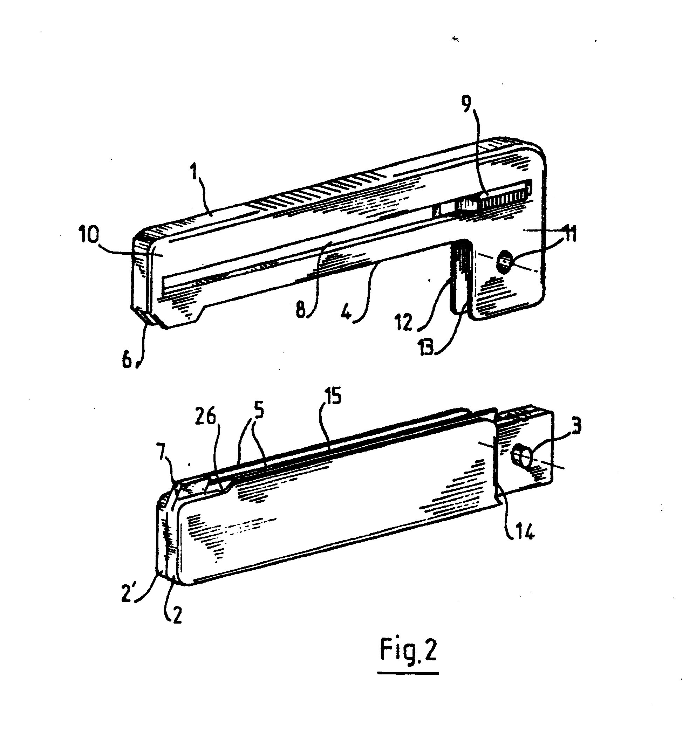

Sur la figure 2, on remarque le carter supérieur (1) et son couvercle (10), constitué d'un corps plastique creux qui permet de loger le curseur de coupe (9). Le couvercle (10) dudit carter étant muni d'une fenêtre (8) pour déplacer le curseur de coupe (9). Les machoires (4) sont aménagées sur les extrémités inférieures des parois du carter et des pattes de guidage (6) servent de guide à la fermeture. Le carter (1) est de forme rectangulaire et deux pattes d'articulation (12) et (13) situées à l'arrière des parois sont pourvues d'alésages (11) qui s'adaptent sur les axes d'articulation (3).

Le carter inférieur, constitué de deux plaques symétriques (2) et (2') sera réalisé de préférence en matière plastique afin de pouvoir être soudé par ultra-son. Chaque plaque porte sur son extrémité supérieure une machoire de retenue (5). La partie arrière (14) est réduite en épaisseur afin de recevoir les pattes d'articulation (12) et (13) du carter supérieur et porte l'axe d'articulation (3). La partie frontale est munie du guide d'alignement (7) qui coopère avec les pattes de guidage (6). La lame (15), d'un type couramment employé dans le commerce pour les cutter à lames continues, est prise en sandwich entre les carters (2) et (2'). Un léger dégagement (26) est aménagé entre la lame et les machoires (5) afin de permettre le déplacement du matériau à découper de part et d'autre de la lame.

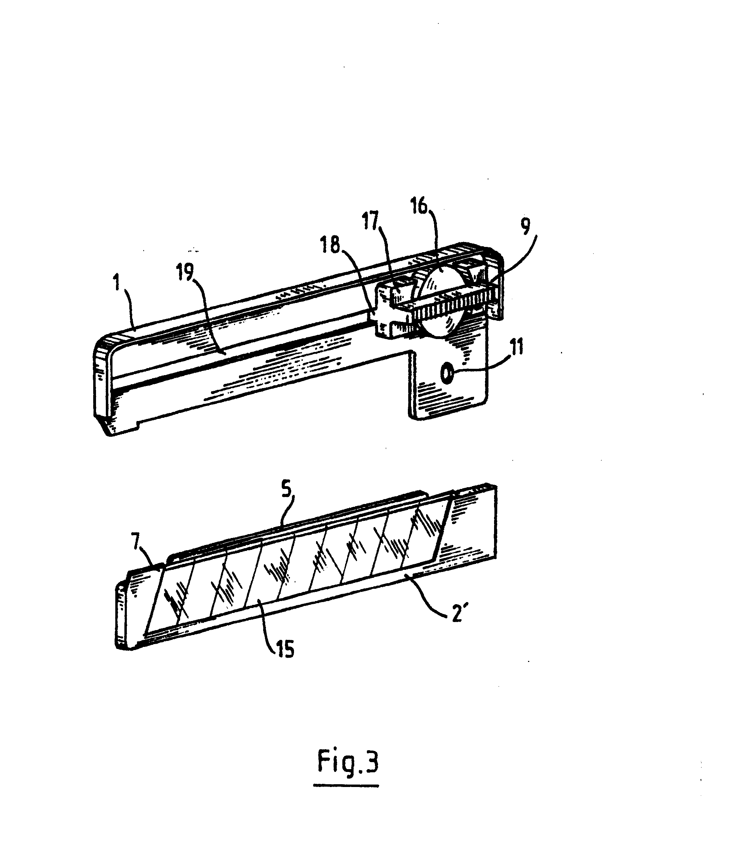

En se reportant à la figure 3, on voit le disposi-

- 5 -

tif démuni du couvercle de carter (10) et sans la partie (2) du carter inférieur.

Le carter supérieur (1) est évidé pour recevoir le curseur (9) qui porte une roulette d'écrasement (16), munie d'une gorge étroite afin de pouvoir évoluer de part et d'autre de la lame (15) sans émousser le fil de la lame. Le curseur est également muni de pattes (17) perpendiculaires au poussoir afin d'être maintenu et guidé dans le carter. Un renflement (18), symétrique du poussoir (9) par rapport aux pattes de retenue (17) coulisse dans un rainurage (19) aménagé dans la paroi intérieure du carter (1) afin de bien maintenir l'axe de la roulette perpendiculaire à la lame (15). La paroi du carter porte sur sa partie inférieure frontale la patte de guidage (6). La partie inférieure de la paroi fait office de machoire (4). La patte d'articulation (12) est percée en (11) pour s'articuler sur l'axe du carter inférieur.

Le carter inférieur, dont on voit l'une des deux parties symétriques (2') porte la lame (15) dans un évidement qui épouse sa forme. Le guide (7) aménagé dans sa partie frontale coopère avec la patte de guidage (6). Une machoire (5) est aménagée légèrement en retrait de la lame sur la partie supérieure du carter.

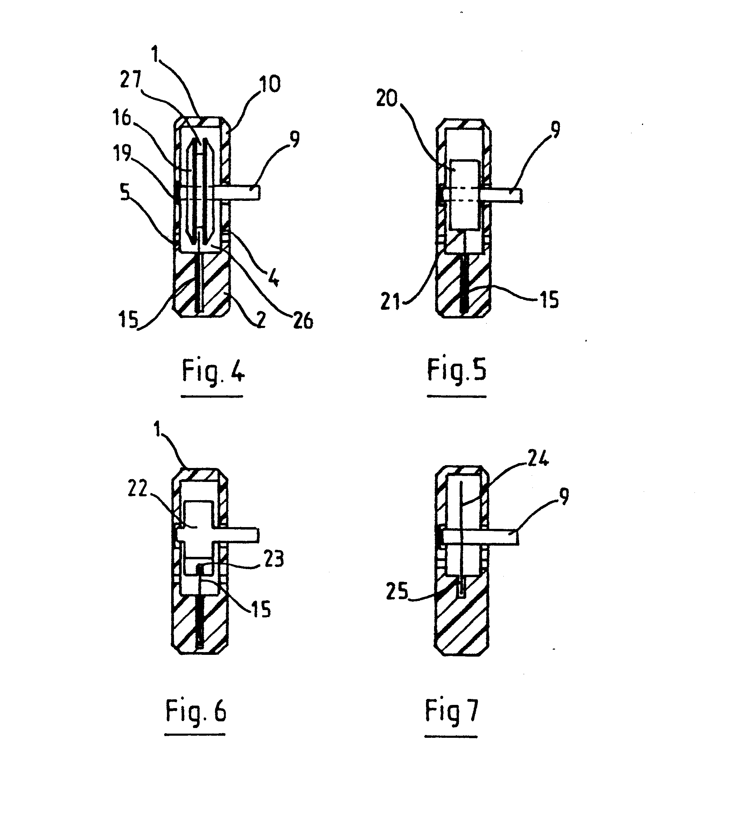

Selon la figure 4, qui est une coupe schématique du mécanisme de coupe on voit : le carter supérieur (1) qui est creux, le couvercle (10), le curseur de coupe (9) qui porte la roulette d'écrasement (16) munie d'une gorge étroite (27), la rainure de guidage (19) du curseur, les machoires supérieures (4), le carter inférieur (2) et (2'), la lame (15), les machoires inférieures (5) et l'espace de dégagement (26).

Le dispositif objet de l'invention ainsi décrit fonctionne de manière fort simple : l'utilisateur saisit d'une main la bande à découper, et de l'autre main, il saisit le couperet en plaçant l'index sous le carter inférieur, et le pouce sur le carter supérieur. Il fait glisser la bande à découper entre les machoires (4) et (5) en l'introduisant par la

- 6 -

partie frontale au niveau du guide (7) et des pattes (6). Il place ainsi le couperet à l'endroit qu'il désire sectionner. En introduisant la bande à découper, celle-ci entraîne la roulette et le curseur de coupe vers l'arrière du dispositif.

Pour réaliser une coupe nette et rapide, il suffit, à l'aide du pouce et de l'index de pincer la bande à découper et à l'aide du pouce de l'autre main d'actionner le curseur (9) pour l'amener à l'autre extrémité de la fenêtre (8).

La bande qui est maintenue fermement entre les machoires (4) et (5) se trouve écrasée par la roulette (16) de part et d'autre de la lame (15) dans le dégagement (26) de telle sorte qu'elle se sectionne sur le fil de la lame.

Lorsque la coupe est achevée, les deux morceaux obtenus restent retenus par les machoires (4) et (5) et l'on peut aisément les saisir sans risque de les voir tomber.

Selon la variation décrite en figure 5, la roulette d'écrasement (16) munie d'une gorge étroite (27) est remplacée par une roulette pleine (20) qui écrase la bande à découper directement sur le fil de la lame au point (21). Cette version qui utilise une roulette d'écrasement plus simple, présente toutefois l'inconvénient d'émousser plus rapidement la lame.

Selon la variante décrite en figure 6, le curseur (9) et la roulette (16) sont remplacés par un curseur/patin (22) muni d'une gorge étroite (23). Le patin évolue de part et d'autre de la lame et refend la bande sans émousser le fil de la lame. Cette version risque toutefois d'entraîner la bande à découper et il convient alors d'exercer plus de pression de fermeture entre les carters supérieurs et inférieurs.

Selon la variante décrite figure 7, le curseur est muni d'un disque lame (24) qui évolue dans une gorge étroite (25) aménagée dans le carter inférieur entre les machoires. Cette version très efficace elle aussi, a un prix de revient plus élevé à cause du disque lame plus coûteux.

Outre les qualités de coupe, de simplicité de montage et de prix de revient très compétitif par rapport à des

- 7 -

ciseaux, le dispositif décrit offre une sécurité totale puisque l'ensemble est dépourvu de parties pointues, et l'ouverture des carters articulés est limitée par les pattes d'articulation (12) et (13) de telle sorte que l'on ne peut placer les doigts entre les machoires pour atteindre la lame.

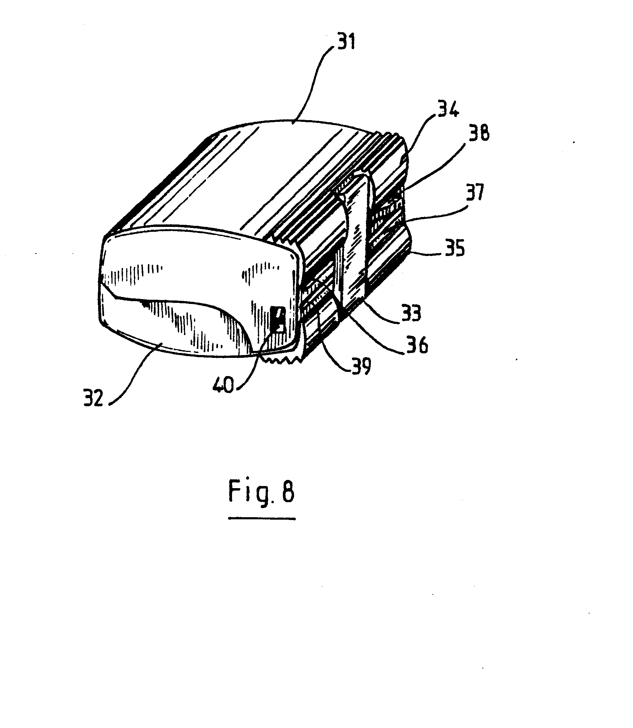

Si l'on se reporte enfin aux figures 8 à 11, on voit sur la figure 8 le boîtier constitué de deux coquilles articulées entre elles (31) et (32). Elles peuvent être maintenues fermées par une languette articulée (33). Les parties frontales (34) et (35) des coquilles reçoivent les carters du couperet (36) et (37) munis respectivement du curseur patin (38) et de la lame (39). Les côtés de la coquille inférieure (32) portent des ergots (40) qui coopèrent avec des fenêtres aménagées sur les côtés de la coquille supérieure pour limiter l'ouverture du boîtier.

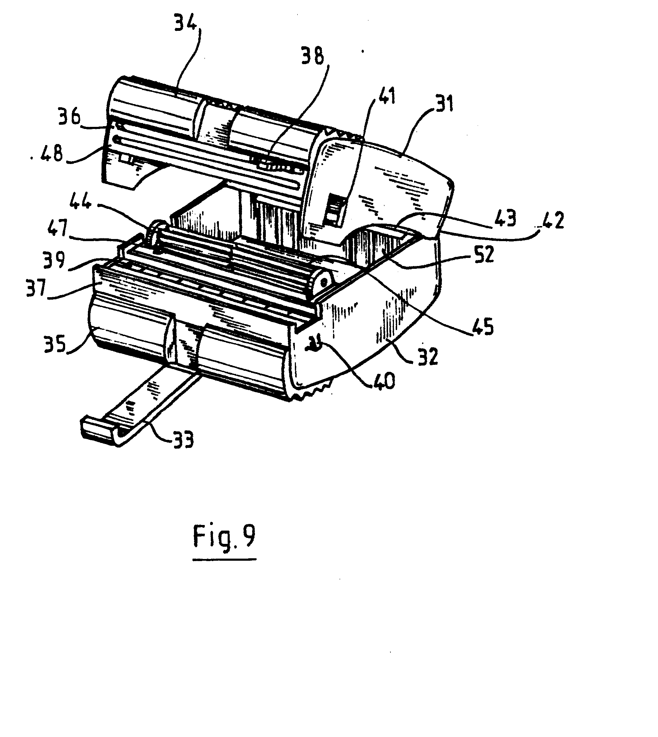

Selon la figure 9, on voit le boîtier et ses deux coquilles articulées (31) et (32). La languette de fermeture du boîtier (33) et les parties frontales (34) et (35) qui reçoivent les carters (36) et (37) munis du curseur patin (38) et de la lame (39).

Les côtés de la coquille inférieure (32) portent chacun un ergot (40) qui coopère avec une fenêtre (41) aménagée sur les côtés de la coquille supérieure (31) qui les recouvrent lorsque le boîtier est fermé.

Les coquilles (31) et (32) sont articulées au niveau d'une charnière souple (42) située à l'arrière, tandis qu'une languette (43) solidaire de la coquille supérieure (31) fait effet ressort au contact de la coquille inférieure (32). Un cylindre (44) coopère avec une table d'amenage (45) logée dans le boîtier pour faire avancer et guider la bande à découper. Un cliquet (47) agit en anti-retour sur le cylindre (44).

Des nervures (52) et (52') placées sur la paroi intérieure du boîtier, permettent de placer des cloisons pour guider la bande enroulée dans le boîtier.

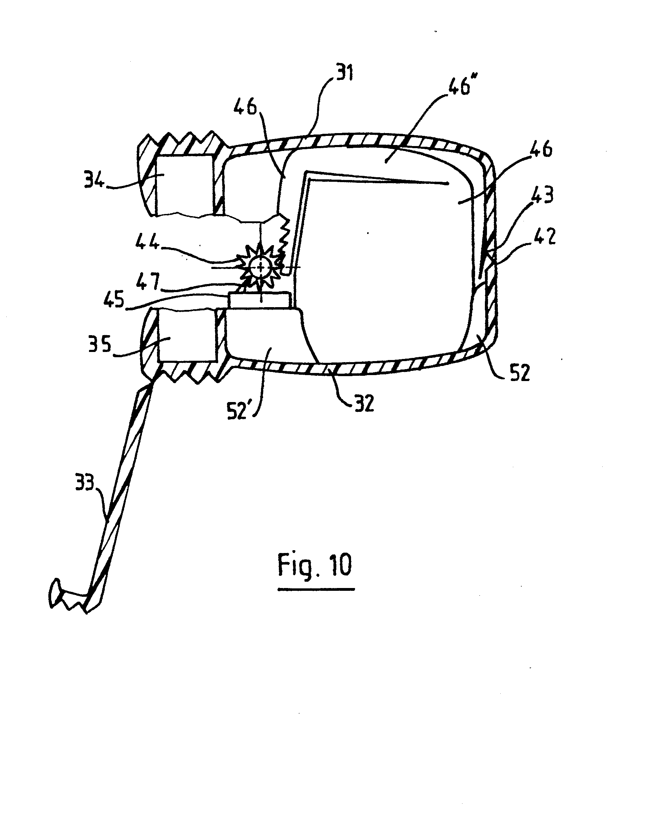

Selon la figure 10, on remarque les coquilles (31) et (32) du boîtier, la languette de fermeture (33), les logements des carters du couperet dans les parties frontales (34) et (35) du boîtier. Les coquilles sont articulées entre elles au niveau d'une charnière souple (42) et une languette (43) fait effet ressort sur la paroi arrière du boîtier. Un cylindre cranté (44) coopère avec une table d'amenage (45) pour guider et faire avancer la bande à découper enroulée dans le boîtier. Le cylindre (44) est entraîné uniquement dans un sens par un cliquet (46) qui peut être cranté et qui est solidaire de la cloison d'alignement (46') qui fait également effet de ressort sur le couvercle au niveau d'une patte (46").

Un cliquet anti-retour (47) est solidaire de la table (45).

Les nervures (52) et (52') placées sur les parois internes de la coquille inférieure (32) permettent de placer les cloisons d'alignement (46') suivant la largeur de la bande à découper.

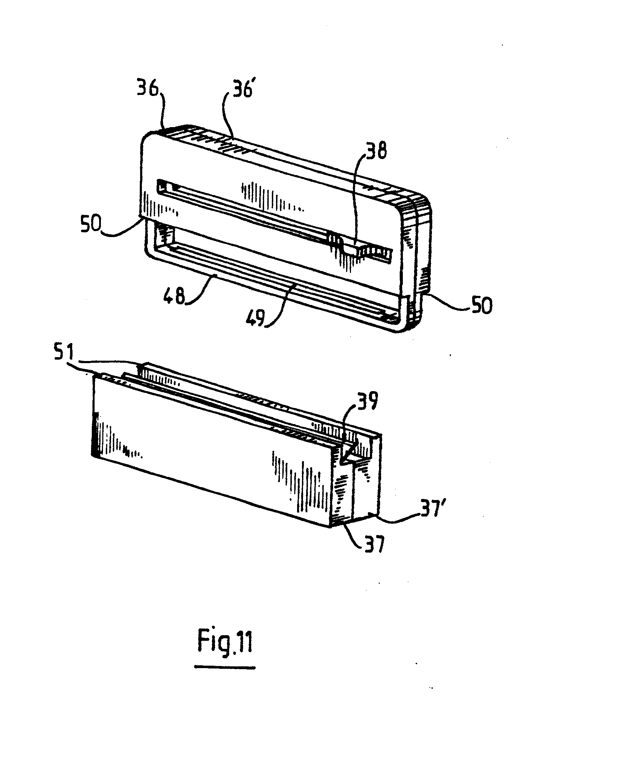

Selon la figure 11, on voit les carters du couperet avant leur articulation au niveau du boîtier.

Le carter supérieur (36) et son couvercle (36') qui contiennent le curseur patin (38). La languette racloir (48) qui se loge entre les machoires (51) du carter inférieur (37) et de son couvercle (37').

La lame (39) se loge dans la fente (49) aménagée dans la languette racloir (48). Les machoires (50) du carter supérieur (36) coopèrent avec les deux machoires (51) du carter inférieur pour maintenir le matériau à découper.

Le dispositif ainsi constitué permet de découper sur mesure une bande qui est enroulée et placée dans le boîtier.

Le boîtier sera fabriqué de préférence en matière plastique souple, tel le polyamide, pour obtenir l'effet charnière entre les coquilles (31) et (32), et pour réaliser l'injection d'une seule pièce à plat qui comprend les coquilles et la table d'amenage (45).

Les cloisons d'alignement (46') permettent de guider correctement différentes largeurs de bandes à découper.

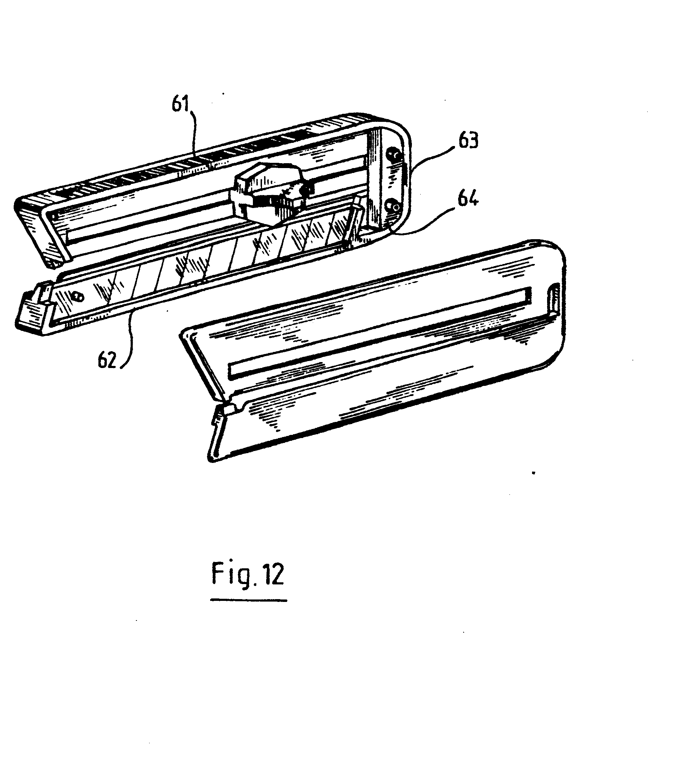

Enfin si l'on se réfère à la figure 12, on voit que les deux carters (61) et (62), semblables aux carters (1) et (2) des figures 1 à 7, au lieu d'être séparés, sont réalisés en une seule pièce de matière plastique, en étant réunis par une zone 63 ; l'élasticité de la matière de cette zone (63) permet d'écarter l'un de l'autre ces deux carters pour ouvrir le dispositif à la place de l'articulation constituée par les pivots(3)et les alésages (11).

Pour éviter que l'angle d'ouverture ne dépasse la valeur pour laquelle la languette (63) risque de se briser, une pièce (64) logée dans la partie postérieure des carters (61-(62) constitue une butée limitant cette ouverture .

L'invention trouvera une application particulièrement intéressante pour conditionner et découper sur mesure des bandes de pansement adhésif ou des bandes de pansement de gaze.

La présente invention sera avantageusement réalisée en matière plastique, moulée par injection et soudée à l'ultra-son pour rester d'un prix compétitif. Toutefois, des versions en fonderie d'alliages légers sont également envisageables pour des modèles plus résistants équipés par exemple de lames interchangeables.

Les applications sont multiples pour découper toutes bandes en fibre composite et en textile. Une application particulièrement avantageuse sera l'utilisation de ce couperet en remplacement des ciseaux pour les bandes de gaze médicales et tous les types de pansements adhésifs à découper sur mesure.

0207868

- 10 -

REVENDICATIONS.

1. Dispositif de couperet destiné en particulier à sectionner des bandes ou rubans de largeur moyenne en textile ou fibres composites qui sont tissées ou superposées, caractérisé en ce qu'il comporte en combinaison deux carters (1) et (2) faisant fonction de pince en étant articulés entre eux à l'une de leurs extrémités, ces deux carters étant munis de machoires (4) et (5) destinées à maintenir le matériau à découper, un moyen de coupe constitué d'une lame (15) fixée sur le carter inférieur (2) et coopérant avec une roulette d'écrasement (16) fixée sur un curseur de coupe (9) évoluant dans le carter supérieur (1).

2. Dispositif selon la revendication 1, caractérisé en ce que la roulette d'écrasement (16) est munie d'une gorge étroite (27) et qu'elle évolue sur la lame (15) au niveau de cette gorge, refoulant le matériau à découper de part et d'autre de la lame.

3. Dispositif selon la revendication 1, caractérisé en ce que le carter inférieur est formé de deux coquilles (2) et (2') qui prennent la lame (15) en sandwich. Les machoires (5) sont situées sur la partie supérieure du carter et sont dégagées par rapport à la lame par un couloir étroit (26). Un guide d'alignement (7) des carters se situe dans la partie avant, tandis que la partie arrière est amincie pour recevoir les pattes d'articulation (12) et (13) du carter supérieur qui se fixe sur l'axe d'articulation (3).

4. Dispositif selon la revendication 1, caractérisé en ce que le carter supérieur (1) réalisé en plastique creux reçoit un couvercle (10) muni d'une fenêtre (8) par laquelle dépasse le curseur de coupe (9) qui porte la roulette d'écrasement (16). Les parois de ce carter, de forme sensiblement rectangulaire portent sur la partie arrière des pattes d'articulation (12) et (13) percées en (11) pour s'adapter sur les axes d'articulation (3) du carter inférieur. Ces pattes d'articulation assurent le bon alignement des carters inférieurs et supérieurs et limitent l'angle d'ouverture du dispositif en venant en butée sur la paroi (14) du carter inférieur. La partie avant des parois du carter portent des pattes de guidage (6) qui coopèrent avec le guide d'alignement (7) du carter inférieur. Les machoires (4) sont situées sur les extrémités inférieures des parois entre les pattes de guidage (6) et les pattes d'articulation (12) et (13).

5. Dispositif selon la revendication 1, caractérisé en ce que les carters (1) et (2) peuvent être maintenus entre-ouvert au repos par un effet ressort au niveau de l'articulation.

6. Dispositif selon la revendication 1, caractérisé en ce que la roulette d'écrasement (16) munie d'une gorge (27), est remplacée par une roulette pleine (20) qui évolue sur le fil (21) de la lame (15) pour refendre le matériau à découper.

7. Dispositif selon la revendication 1, caractérisé en ce que le moyen de coupe est obtenu par un curseur/patin (22) muni d'une gorge étroite (23) et qui évolue sur la lame (15) au niveau de cette gorge pour refouler vers la lame le matériau à découper.

8. Dispositif selon la revendication 1, caractérisé en ce que le moyen de coupe est obtenu par un disque lame (24) fixé sur le curseur de coupe (9) et qui évolue dans une gorge étroite (25) aménagée dans le carter inférieur entre les machoires de maintien du matériau.

9. Dispositif selon la revendication 1, caractérisé en ce que les carters (36) et (37) sont articulés entre eux en étant logés respectivement dans les parties frontales (34) et (35) d'un boîtier articulé en deux coquilles (31) et (32), que ce boîtier fait office de container pour le matériau à découper, qu'il comporte un moyen de maintien en position fermée, un moyen de maintien en position entre-ouverte, un moyen d'alignement de la bande emmagasinée, un moyen d'extraction pro-

- 12 -

gressive de cette bande et un moyen de dégagement de celle-ci au niveau de la lame.

10. Dispositif selon la revendication 9, caractérisé en ce que les deux coquilles (31) et (32) du boîtier sont articulées entre elles par une charnière souple (42) à l'arrière du boîtier, et qu'une languette (43) fait fonction de ressort tendant à ouvrir les coquilles.

11. Dispositif selon la revendication 9, caractérisé en ce que le moyen de maintien en position fermée des deux coquilles est constitué d'une languette (33) solidaire de la coquille inférieure (32) au niveau d'une charnière souple dans la partie frontale (35) et qui se verrouille sur la partie frontale (34) de la coquille supérieure (31).

12. Dispositif selon la revendication 9, caractérisé en ce que le moyen de maintien du boîtier en position entreouverte est constitué de deux ergots (40) placés sur les flancs de la coquille inférieure (32) et qui coopèrent avec deux fenêtres (41) placées sur les flancs de la coquille supérieure (31) pour limiter l'ouverture obtenue par les languettes ressort (43) et (46").

13. Dispositif selon la revendication 9, caractérisé en ce que le moyen d'alignement de la bande emmagasinée est constitué par deux cloisons (46') qui sont placées verticalement dans le boîtier en se logeant dans les nervures (52) et (52').

14. Dispositif selon la revendication 9, caractérisé en ce que le moyen d'extraction progressive de la bande emmagasinée est constitué par un cylindre cranté (44) qui est fixé sur une table d'amenage (45) solidaire de la coquille inférieure (32), et qui coopère avec un cliquet (46) actionné lors de la fermeture des coquilles (31) et (32), et un second cliquet anti-retour (47) placé sur la table d'amenage.

15. Dispositif selon la revendication 14, caractérisé en ce que le cliquet d'avancée (46) est solidaire de la patte ressort (46") située dans la partie supérieure de la cloison (46').

- 13 -

16.        Dispositif selon la revendication 9, caractérisé en ce que le moyen de dégagement de la bande au niveau de la lame est constitué par une languette racloir (48), munie d'une fente (49), solidaire du carter supérieur (36) et qui s'adapte sur la lame (39) entre les machoires (51) du carter inférieur (37).

0207868

Fig.1

Pl. II / 9

0207868

Fig.2

Pl. III / 9

0207868

**Fig.3**

Fig. 4

Fig. 5

Fig. 6

Fig 7

Fig. 8

Fig.9

Fig. 10

Fig.11

Fig.12

## DOCUMENTS CONSIDERES COMME PERTINENTS

| Catégorie | Citation du document avec indication. en cas de besoin des parties pertinentes | Revendication concernee | CLASSEMENT DE LA DEMANDE (Int Cl 4) |
|---|---|---|---|
| Y | US-A-3 466 963 (PALSON & HAWES)<br><br>* Colonnes 3,4; figure 2 *<br><br>--- | 1,2,5-7,9,12-15 | B 26 B 27/00<br>B 65 H 35/00<br>A 61 F 15/00 |
| Y | FR-A-2 445 201 (MARCAL PAPER MILLS INC.)<br><br>* Pages 3-5; figures 1,3 *<br><br>--- | 1,2,5-7,9,12-15 | |
| A | DE-A-2 841 404 (R. WOERNDLE)<br>* Page 3; plan unique *<br><br>--- | 4 | |
| A | US-A-3 138 312 (J.H. NEWMAN)<br><br>--- | | |
| A | US-A-3 370 497 (C.E. BUSSE)<br><br>----- | | |

**DOMAINES TECHNIQUES RECHERCHES (Int Cl 4)**

B 26 B
B 65 H
B 65 C
A 61 F

Le présent rapport de recherche a été etabli pour toutes les revendications

| Lieu de la recherche | Date d achevement de la recherche | Examinateur |
|---|---|---|
| LA HAYE | 27-08-1986 | WOHLRAPP R.G. |